# EUROPEAN PATENT SPECIFICATION

(11) **EP 1 916 186 B1**
(45) Date of publication and mention of the grant of the patent: **06.05.2009**
(21) Application number: 06381041.0
(22) Date of filing: 24.10.2006
(51) Int. Cl.: B64D 39/00

(54) **Refueling boom with a fail-safe roll-pitch device**
Luftbetankungssonde mit ausfallsicherem Roll- und Nickscharnier
Sonde de ravitaillement en vol avec joint en roulis et tangage à sécurité intégrée

(43) Date of publication of application: 30.04.2008
(73) Proprietor: Eads Construcciones Aeronauticas S.A., 28022 Madrid (ES)
(72) Inventor: Ortega de Miguel, Mariano c/o EADSCASA, 28906 Madrid (ES); San Jose Orche, Antonio c/o EADSCASA, 28906 Madrid (ES)
(74) Representative: Elzaburu Marquez, Alberto

(56) References cited:
- EP-A1- 0 780 292
- US-A- 2 953 332
- US-A- 3 091 419
- US-A- 3 599 907
- US-A- 4 072 283
- US-A- 4 129 270
- US-A- 4 438 793
- US-A- 4 586 683

## Description

### TECHNICAL FIELD

The present invention relates generally to aircraft refueling booms and more specifically to an aircraft refueling boom having a fail-safe roll-pitch device.

### BACKGROUND

The maneuvering needs of aircraft refueling booms require that they shall be joined to the tanker aircraft by means of a mechanical articulation providing at least a conical pivoting angular motion of the boom towards its pitch and roll axes.

Known proposals in this respect are disclosed in US 4,586,683 and US 5,785,276.

One drawback of said proposals is that the structural integrity of said mechanical articulations is limited.

On the other hand, known aircraft refueling booms have limited fuel flow growth capability.

The present invention is intended to solve these drawbacks.

### SUMMARY OF THE INVENTION

The present invention provides a refueling apparatus for interconnecting a tanker aircraft with a receiver aircraft in flight comprising a boom joined to said tanker aircraft by means of a mechanical articulation comprising a first device including a pivot axis, that is horizontal and perpendicular to the tanker aircraft longitudinal axis, a second device including a roll axis, that is contained in the tanker aircraft plane of symmetry and can be rotated around said pivot axis, a third device including a pitch axis, that is perpendicular to the boom and can be rotated around said roll axis; having at least one of these devices fail safe means providing a duplication of the load paths along the device. The refueling apparatus also comprises a fuel line connected to the tanker aircraft fuel line by means of a rigid fuel tight coupling.

One advantage of the present invention is that it provides a refueling boom device having a fail safe mechanical articulation joining the boom to the tanker aircraft.

Another advantage of the present invention is that it provides a refueling boom with a highly efficient fuel flow capability allowing to increase fuel flow capability of prior art.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein.

Figure 1 shows a side view of a refueling boom according to the invention.

Figure 2 is an enlarged view of the central part of Figure 1 showing the fuel tight coupling device of the refueling boom.

Figure 3 is a side view of a device mechanizing one axis of the articulation joining the boom to the tanker aircraft that includes fail-safe means.

### DETAILED DESCRIPTION OF THE INVENTION

An aircraft refueling boom 21 is a telescoping beam fuel-tight unit attached to its forward end to the underside fuselage tail of an aircraft 11 by means of a mechanical articulation 41. Integrally attached to the boom 21 are aerodynamic lift surfaces 29 called ruddevators which are used to aerodynamically control the position of the boom 21 in elevation and azimuth.

The outer end portion 23 of the boom 21 is a telescoping section for inward and outward movement. Located on the distal end of the telescoping tube 23 is a boom tip assembly 25 and a nozzle 27. The receiver aircraft, not shown, is equipped with an aerial refueling receptacle which engages with the nozzle 27 for the refueling operation.

The telescoped beam 23 provides fuel passage from a fixed fuel line 31, connected to the tanker aircraft line 33 by means of a coupling 35 integrated with the mechanical articulation 41, to the nozzle 27.

In order to satisfy the refueling space envelope requirements (with respect to the tanker aircraft reference axes), the boom 21 incorporates at is union with the tanker aircraft 11 a mechanical articulation 41 that provides it with two degrees of freedom and, in particular, a conical pivoting angular motion of the boom towards its pitch and roll axes as it will be explained in more detail below.

The mechanical articulation 41 will be also called the roll-pitch device 41 In the following pages.

The boom 21 is orientated towards the refueling space envelope via two ruddevators 29 (each one tied to the boom main structural tube tip via a rotary hinge) in a 'V' tail type configuration. The aerodynamically control forces to aim the boom arises by changing the incidence angle of the ruddevators with respect the free air stream. The relative positioning of each ruddevator incidence angle is achieved by an operator located in the tanker aircraft that can exercise remote control of the refueling operation via dedicated devices allocated on a control console.

The boom operator, not shown, located in the tanker aircraft 11, guides the boom 21 so as to line the boom nozzle 27 with the receiver aircraft receptacle. When the boom nozzle 27 is dynamically aligned with the receiver receptacle the boom operator extends the telescoping portion 23, so that the nozzle 27 engages the receptacle to complete the coupling which must be accomplished and maintained within a predetermined refueling envelope to avoid a disconnection.

The actual boom movement is determined by the boom roll-pitch device 41 that provides the required degrees of freedom to accompany the receiver aircraft when coupled.

The roll-pitch device 41 allows the kinematical coupling between tanker and receiver aircraft within the boom movement envelope, and it is composed of the following devices:
- A first device 43 that includes a pivot axis 45 that is horizontal and perpendicular to the tanker aircraft 11 longitudinal axis.
- A second device 47 that includes a roll axis 49 that is contained in the tanker aircraft 11 plane of symmetry and can be rotated around said pivot axis 45.
- A third device 51 that includes a pitch axis 53 that is perpendicular to the boom 21 and can be rotated around said roll axis 49
- A compensation device 55 that avoids the movement along the pivot axis 45 and the pitch axis 53 at the same time.

When the boom 21 is deployed, the roll axis 49 is positioned close to the air stream direction, whereas when stowed, the roll axis 49 remains at a convenient position with respect to the tanker aircraft 11 longitudinal axis.

During deployment, the second device 47 rotates around the pivot axis 45 accompanied by the compensation device 55 until a conveniently selected angle where its movement is restrained by a stop. Then the compensation device 55 allows for the rotation of the boom 21 around the pitch axis 53 until the safe nominal envelope for refueling can be achieved.

The stowage movement is a reversion of the deployment movement.

According to this invention at least one of said first, second and third devices 43, 47, 51 includes fail-safe means providing at least a duplication of the load paths along said devices during the refueling operation.

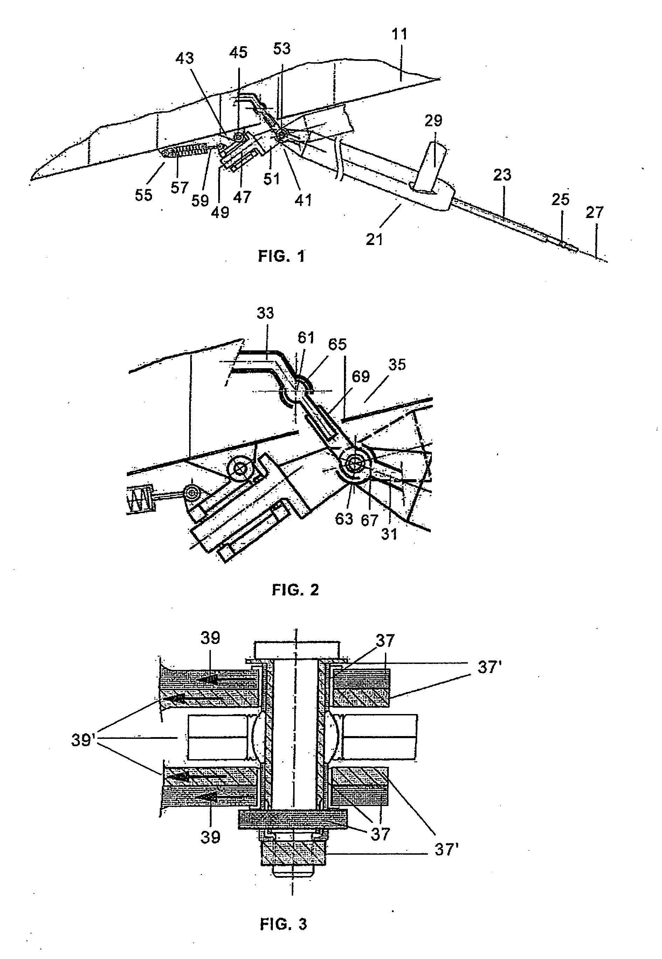

In a preferred embodiment, illustrated in Fig. 3, said fail-safe means consist of duplicated components 37, 37' providing two load paths 39, 39' along the device.

Consequently, even if a failure of a component of the first load path does occur, there will always be sufficient strength and stiffness in the remaining second load path to enable the device to be used safely until the crack is discovered. This concept implies that periodic in-service inspection is a necessity, and that the inspection methods used must ensure that cracked members will be discovered, so that repairs or replacements can be made.

In a preferred embodiment the pivot axis device 43 and the pitch axis device 51 include fail-safe means 37, 37'.

In a preferred embodiment the compensation device 55 is a forces and moments compensation mechanism consisting of a set of symmetrical spring loaded actuators 57 linked through a bell crank 59. It is conveniently located so as to avoid the movement along the pivot axis 45 and the pitch axis 53 at the same time.

In another preferred embodiment the compensation device 55 is a fail-safe forces and moments compensation mechanism consisting of a dual load path bell crank 59 and dual spring loaded actuator devices 57.

In another preferred embodiment the compensation device 55 is a fail-safe mechanism consisting of dual redundant hydraulic actuators or dual redundant electro-mechanical actuators.

The aircraft fuel line 33 connects to a rigid fuel tight coupling 35 with a flanged connection (not shown). The rigid fuel tight coupling 35 connects to the boom fuel line 31 with a flanged connection (not shown). The upper end of the rigid fuel tight coupling 35 incorporates a fixed ball point 61 whereas the lower end incorporates a movable ball point 63 compatible with the roll-pitch device 41.

The rigid fuel tight coupling 35 is integrated with the roll-pitch device 41 and cinematically linked to it. The rigid fuel tight coupling 35 accommodates pivot, pitch and roll motions of the boom 21 during boom deployment free flight and connection with the receiver aircraft allowing for an universal coupling thereof.

In a preferred embodiment the rigid fuel tight coupling 35 is composed of tight spherical joints 65, 67 and one telescoping fuel tight tube 69.

The convenient disposition of spherical joints 65, 67 and telescoping tubes 69 minimizes the loads induced over the boom 21 and the aircraft fuel line 33 by their relative movement, and improves the loads distribution within the device.

In another preferred embodiment the rigid fuel tight coupling 35 includes swivel and elbow joints.

In another preferred embodiment the rigid fuel tight coupling 35 is composed of a bellows accompanying similarly equivalent devices.

The rigid fuel tight coupling 35 accommodates for larger fuel flows (up to 1,500 gallons per minute) with minimized fuel pressure losses with respect to the flexible couplings known in the prior art.

On the other hand, a rigid fuel tight coupling 35 combined with the roll-pitch-device 41 increases the service life of the boom when compared with booms known in the prior art.

Although the present invention has been fully described in connection with preferred embodiments, it is evident that modifications may be introduced within the scope thereof, not considering this as limited by these embodiments, but by the contents of the following claims.

## Claims

1. A refueling apparatus for interconnecting a tanker aircraft (11) with a receiver aircraft in flight comprising a boom (21) joined to said tanker aircraft (11) by means of a mechanical articulation (41),
said mechanical articulation (41) comprising a first device (43) including a pivot axis (45) that is horizontal and perpendicular to the tanker aircraft (11) longitudinal axis, a second device (47) including a roll axis (49) that is contained in the tanker aircraft (11) plane of symmetry and can be rotated around said pivot axis (45) and a third device (51) including a pitch axis (53) that is perpendicular to the boom (21) and can be rotated around said roll axis (49),
said boom (21) being attached to said third device (51),
said boom (21) including a fuel line (31) connected to the tanker aircraft fuel line (33),
**characterized in that**:
a) al least one of said first, second and third devices (43, 47, 51) include fail-safe means (37, 37') providing a duplication of the load paths (39, 39') along the device;
b) it includes a fuel tight coupling (35) consisting of rigid mutually movable components in mutual fluid communication connecting the boom fuel line (31) and the tanker fuel line (33).

2. A refueling apparatus according to claim 1, **characterized in that** it also includes means for avoiding the rotation of the boom (21) around the pivot axis (45) and the pitch axis (53) at the same time.

3. A refueling apparatus according to any of claims 1-2, **characterized in that** said first and third devices (43, 51) include fail-safe means (33, 33') providing a duplication of the load paths (37, 37').

4. A refueling apparatus according to claim 1 **characterized in that** said fuel tight coupling (35) includes one telescoping fuel tight tube (69) and two fuel tight spherical joints (65, 67).

## Patentansprüche

1. Betankungsvorrichtung zur Verbindung eines Betankungsflugzeugs (11) mit einem Empfängerflugzeug während des Flugs, mit einem Ausleger (21), der durch eine mechanische Artikulationsanordnung (41) mit dem Betankungsflugzeug (11) verbunden ist, wobei die mechanische Artikulationsanordnung (41) eine erste Vorrichtung (43) mit einer Schwenkachse (45), die horizontal und rechtwinklig zu der Längsachse des Betankungsflugzeugs (11) verläuft, und eine zweite Vorrichtung (47) mit einer Rollachse (49), die in der Symmetrieebene des Betankungsflugzeugs (11) angeordnet ist und um die Schwenkachse (45) gedreht werden kann, und eine dritte Vorrichtung (51) mit einer Nickachse (53) aufweist, die rechtwinklig zu dem Ausleger (21) verläuft und um die Rollachse (49) gedreht werden kann,
wobei der Ausleger (21) au der dritten Vorrichtung (51) befestigt ist,
wobei der Auslegen (21) mit einer Brennstoffleitung (31) versehen ist, die mit der Brennstoffleitung (33) des Betankungsflugzeugs verbunden ist,
**dadurch gekennzeichnet, dass**:
a) mindestens eine der ersten, zweiten und dritten Vorrichtungen (43,47,51) eine Ausfallsicherungsvorrichtung (37,37') enthält, die eine Duplizierung der Belastungswege (39,39') entlang der Vorrichtung bildet;
b) die Betankungsvorrichtung eine brennstoffdichte Kopplungsvorrichtung (35) aufweist, die aus steifen, drehend bewegbaren Komponenten in gegenseitiger Fluidverbindung besteht, über welche die Ausleger-Brennstoffleitung (31) und die Betankungsflugzeug-Brennstoffleitung (33) miteinander verbunden sind.

2. Betankungsvorrichtung nach Anspruch 1, **dadurch gekennzeichnet, dass** sie ferner eine Vorrichtung zum Verhindern einer gleichzeitigen Drehung des Auslegers (21) um die Schwenkachse (45) und die Nickachse (53) aufweist.

3. Betankungsvorrichtung nach einem der Ansprüche 1-2, **dadurch gekennzeichnet, dass** die ersten und dritten Vorrichtungen (43,51) eine Ausfallsicherungsvorrichtung (33,33') enthalten, die eine Duplizierung der Belastungswege (37,37') bildet.

4. Betankungsvorrichtung nach Anspruch 1, **dadurch gekennzeichnet, dass** die brennstoffdichte Koppfungsvorrichtung (35) ein teleskopierend ein- und ausfahrbares brennstoffdichtes Rohr (69) und zwei brennstoffdichte Kugelgelenke (65,67) aufweist.

## Revendications

1. Appareil de ravitaillement permettant de relier entre eux un avion-citerne (11) et un avion receveur en vol comprenant une perche (21) réunie au dit avion-citerne (11) au moyen d'une articulation mécanique (41),
ladite articulation mécanique (41) comprenant un premier dispositif (43) incluant un axe pivot (45) qui est horizontal et perpendiculaire à l'axe longitudinal de l'avion-citerne (11), un deuxième dispositif (47) incluann un axe de roulis (49) qui est contenue dans le plan de symétrie de l'avion-citerne (11) et peut tourner autour dudit axe pivot (45) et un troisième dispositif (51) incluant un axe de tangage (53) qui est perpendiculaire à la perche (21) et qui peut tourne autour dudit axe de roulis (49),
ladite perche (21) étant attachée au dit troisième dispositif (51),
ladite perche (21) incluant une conduite de carburant (31) raccordée à la conduite de carburant (33) de l'avion-citerne,
**caractérise en ce que**:
a) au moins l'un desdits premier, deuxième est troisième dispositifs (43, 47, 51) inclut des moyens à sécuritè intégrée (37, 37') fournissant un doublage des chemins de charge (39 39') le long du dispositif;
b) il inclut un couplage étanche au carburant (35) consistant en composants rigies et moviles les uns par rapport aux autres en communication fluidique les uns avec les autres, raccordant la conduite de carburant (31) de la perche et la conduite de carburant (33) de l'avion-citerne.

2. Appareil de ravitaillement selon la revendication 1, **caractérisé en ce qu'**il comprend également des moyens permettant d'éviter la rotation de la perche (21) autour de l'axe pivot (45) et de l'axe de tangage (53) en même temps.

3. Appareil de ravitaillement selon l'une quelconque des revendications 1 à 2, **caractérisé en ce que** lesdits premier et troisième dispositifs (43, 51) incluent des moyens à sécurité intégrée (33, 33') fournissant un doublage des chemins de charge (37, 37').

4. Appareil de ravitaillement selon la revendication 1, **caractérisé en ce que** ledit couplage étanche au carburant (35) inclut un tube télescopique étanche au carburant (69) et deux joints sphériques étanches au carburant (65, 67),
